(19) Europäisches Patentamt
European Patent Office
Office européen des brevets

(11) **EP 4 518 181 A1**

(12) **EUROPEAN PATENT APPLICATION**
published in accordance with Art. 153(4) EPC

(43) Date of publication:
**05.03.2025 Bulletin 2025/10**

(21) Application number: 23827458.3

(22) Date of filing: **19.06.2023**

(51) International Patent Classification (IPC):
**H04B 7/06** (2006.01)   **H04W 72/23** (2023.01)
**G06N 3/04** (2023.01)

(52) Cooperative Patent Classification (CPC):
**G06N 3/04; H04B 7/06; H04W 72/04; H04W 72/23**

(86) International application number:
**PCT/KR2023/008418**

(87) International publication number:
**WO 2023/249342 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.06.2022 KR 20220077815**

(71) Applicant: Samsung Electronics Co., Ltd.
Suwon-si, Gyeonggi-do 16677 (KR)

(72) Inventors:
• **LEE, Seunghyun**
Suwon-si, Gyeonggi-do 16677 (KR)
• **JANG, Hyeondeok**
Suwon-si, Gyeonggi-do 16677 (KR)
• **KIM, Suhwook**
Suwon-si, Gyeonggi-do 16677 (KR)
• **KIM, Wonjun**
Suwon-si, Gyeonggi-do 16677 (KR)
• **LEE, Changsung**
Suwon-si, Gyeonggi-do 16677 (KR)

(74) Representative: **Nederlandsch Octrooibureau**
P.O. Box 29720
2502 LS The Hague (NL)

(54) **METHOD AND APPARATUS FOR REPORTING CHANNEL STATE INFORMATION IN WIRELESS COMMUNICATION SYSTEM**

(57)     Provided is a 5th-generation (5G) or 6th-generation (6G) communication system for supporting higher data rates after the 4th-generation (4G) communication system such as long term evolution (LTE). According to an embodiment of the disclosure, a user equipment (UE) may compress channel state information (CSI) data estimated between a base station (BS) and the UE through an artificial intelligence (AI) model for encoding trained in association with an AI model for decoding in the BS, transmit the compressed CSI data to the BS, transmit, to the BS, the CSI data on which the compression is not performed, based on a preset condition, and receive information for updating the AI model for encoding when the BS determines to update the AI model for encoding based on the CSI data.

FIG. 1

**Description**

TECHNICAL FIELD

An embodiment of the disclosure relates to reporting channel state information (CSI) in a wireless communication system, and more particularly, to a method and apparatus for reporting CSI based on artificial intelligence (AI).

BACKGROUND ART

Looking back through successive generations at a process of development of radio communication, technologies for human-targeted services such as voice, multimedia, data or the like have been developed. Connected devices that are on the explosive rise after commercialization of 5th-generation (5G) communication systems are expected to be connected to communication networks. As examples of things connected to networks, there may be cars, robots, drones, home appliances, displays, smart sensors installed in various infrastructures, construction machinery, factory equipment, etc. Mobile devices are expected to evolve into various form factors such as augmentation reality (AR) glasses, virtual reality (VR) headsets, hologram devices, and the like. In order to provide various services by connecting hundreds of billions of devices and things in the 6th-generation (6G) era, there are ongoing efforts to develop better 6G communication systems. For these reasons, 6G communication systems are referred to as beyond-5G systems.

In the 6G communication system expected to become a reality by around 2030, a maximum transfer rate is tera bits per second (bps), i.e., 1000 giga bps, and a maximum wireless delay is 100 micro seconds ($\mu$sec). In other words, in the 6G communication system, the transfer rate becomes 50 times faster and the wireless delay is reduced to one-tenth of the 5G communication system.

To attain these high data transfer rates and ultra-low delay, the 6G communication system is considered to be implemented in the terahertz (THz) band (e.g., ranging from 95 gigahertz (GHz) to 3 THz). Due to the more severe path loss and atmospheric absorption phenomenon in the THz band as compared to the millimeter wave (mmWave) band introduced in 5G systems, importance of technology for securing a signal range, i.e., coverage, is expected to grow. As major technologies for securing coverage, radio frequency (RF) elements, antennas, new waveforms superior to orthogonal frequency division multiplexing (OFDM) in terms of coverage, beamforming and massive multiple-input and multiple-output (massive MIMO), full dimensional MIMO (FFD-MIMO), array antennas, multiple antenna transmission technologies such as large scale antennas, etc., need to be developed. Besides, new technologies for increasing coverage of THz band signals, such as metamaterial based lenses and antennas, a high-dimensional spatial multiplexing technique using orbital angular momentum (OAM), reconfigurable intelligent surface (RIS), etc., are being discussed.

Furthermore, in order to enhance frequency efficiency and system networks, a full duplex technology by which both uplink and downlink transmissions use the same frequency resource at the same time, a network technology that comprehensively uses satellite and high-altitude platform stations (HAPS) and the like, a network structure innovation technology supporting mobile base stations and allowing optimization and automation of network operation, a dynamic spectrum sharing technology through collision avoidance based on spectrum usage prediction, an artificial intelligence (AI) based communication technology to realize system optimization by using AI from the designing stage and internalizing an end-to-end AI supporting function, a next generation distributed computing technology to realize services having complexity beyond the limit of terminal computing capability by using ultrahigh performance communication and computing resources (e.g., mobile edge computing (MEC) cloud) are being developed in the 6G communication system. In addition, by designing new protocols to be used in 6G communication systems, developing mechanisms for implementing a hardware-based security environment and safe use of data, and developing technologies for protecting privacy, attempts to strengthen connectivity between devices, further optimize the network, promote softwarization of network entities, and increase the openness of wireless communication are continuing.

With such research and development of the 6G communication system, it is expected that new levels of the next hyper-connected experience become possible through hyper-connectivity of the 6G communication system including not only connections between things but also connections between humans and things. Specifically, it is predicted that services such as truly immersive extended reality (truly immersive XR), high-fidelity mobile hologram, digital replication, etc., may be provided. Furthermore, services such as remote surgery, industrial automation and emergency response with enhanced security and reliability may be provided through the 6G communication system to be applied in various areas such as industry, medical care, vehicles, appliances, etc.

Disclosure

Technical Problem

Embodiments of the disclosure provide a method and apparatus for performing reporting channel state information (CSI) based on an artificial intelligence (AI) model.

Technical Solution

Provided is a 5th-generation (5G) or 6th-generation (6G) communication system for supporting higher data rates after the 4th-generation (4G) (4G) communication system such as long term evolution (LTE). According to an embodiment of the disclosure, a UE may compress channel state information (CSI) data estimated between a base station (BS) and the UE through an AI model for encoding trained in association with an AI model for decoding in the BS, transmit the compressed CSI data to the BS, transmit, to the BS, the CSI data on which the compression is not performed, based on a preset condition, and receive information for updating the AI model for encoding when the BS determines to update the AI model for encoding based on the CSI data.

Description of Drawings

FIG. 1 is a diagram for describing an autoencoder based compression and reconstruction procedure for channel state information (CSI) data.
FIG. 2 is a diagram for describing an example of a method by which a base station (BS) reconstructs compressed CSI data.
FIG. 3 is a flowchart for describing a method of performing CSI profiling, according to an embodiment.
FIG. 4 is a flowchart for describing a method of performing CSI profiling at the request of a BS, according to an embodiment.
FIG. 5A is a diagram for describing a method of specifying a portion of CSI data, according to an embodiment.
FIG. 5B is a diagram for describing a method of specifying a portion of CSI data, according to an embodiment.
FIG. 6 is a flowchart for describing operation of a BS for CIS profiling, according to an embodiment.
FIG. 7 is a flowchart for describing operation of a user equipment (UE) for CSI profiling, according to an embodiment.
FIG. 8 is a flowchart for describing a method of performing CSI profiling at preset intervals, according to an embodiment.
FIG. 9 is a flowchart for describing a method of performing CSI profiling at the request of a UE, according to an embodiment.
FIG. 10 is a flowchart for describing a method of performing CSI profiling at preset intervals, according to an embodiment.
FIG. 11 is a block diagram of a UE, according to an embodiment.
FIG. 12 is a block diagram of a BS, according to an embodiment.

Best Mode

According to an embodiment, a method of a user equipment (UE) for reporting channel state information (CSI) in a wireless communication system may include compressing CSI data estimated between a base station (BS) and the UE through an artificial intelligence (AI) model for encoding jointly trained with an AI model for decoding of the BS; transmitting the compressed CSI data to the BS; transmitting, to the BS, the CSI data before compression is performed, based on a preset condition; and receiving information for updating the AI model for encoding when the BS determines to update the AI model for encoding based on the CSI data.

According to an embodiment, a method of a BS for reporting CSI in a wireless communication system may include receiving, from a UE, CSI data compressed through an AI model for encoding jointly trained with an AI model for decoding of the BS; receiving, from the UE, CSI data before compression is performed, based on a preset condition; determining to update the AI model for encoding based on the CSI data; and transmitting information for updating the AI model for encoding.

According to an embodiment, a UE for reporting CSI in a wireless communication system includes a transceiver; and a processor connected to the transceiver, and the processor may be configured to compress CSI data estimated between a BS and the UE through an AI model for encoding jointly trained with an AI model for decoding of the BS, transmit the compressed CSI data to the BS, transmit, to the BS, the CSI data before compression is performed, based on a preset condition, and receive information for updating the AI model for encoding when the BS determines to update the AI model for encoding based on the CSI data.

According to an embodiment, a BS for reporting CSI in a wireless communication system includes a transceiver; and a processor connected to the transceiver, and the processor may be configured to receive, from a UE, CSI compressed through an AI model for encoding jointly trained with an AI model for decoding of the BS, receive, from the UE, CSI data before compression is performed, based on a preset condition, determine to update the AI model for encoding based on the CSI data, transmit information for updating the AI model for encoding.

According to an embodiment of the disclosure, provided is a computer-readable recording medium storing a program to execute at least one of the embodiments of the disclosure. on a computer.

According to embodiments of the disclosure, CSI reporting is performed by using an AI model adaptive to environmental changes such as in network characteristics, channel characteristics or data characteristics, thereby avoiding performance deterioration of the communication system.

Other technical features may be clearly understood by those of ordinary skill in the art with reference to accompanying drawings, descriptions and appended claims.

Before starting "detailed description", particular terms and phrases used throughout this specification will now be defined first. The term "couple" and derivatives thereof refer to direct or indirect communication between two or more elements no matter whether the elements physically come into contact with each other. Not only the terms "transmit", "receive" and "communicate" but also their derivatives include both direct communication and indirect communication. The terms "include" and "comprise" as well as derivatives thereof mean inclusion without limitation. The term "or" is inclusive and refers to "and/or". The phrase "related to A" and derivatives thereof refer to "include A", "included in A", "interconnect with A", "contain A", "contained in A", "connect to or with A", "couple to or with A", "communicate with A", "cooperate with A", "interleave A", "juxtapose A", "approach A", "associated to or with A", "have A", "characterized by A", "have a relation to or with A", etc.

When the term "connected" or "coupled" is used, a component may be directly connected or coupled to another component. However, unless otherwise defined, it is also understood that the component may be indirectly connected or coupled to the other component via another new component.

Mode for Invention

Various modifications may be made to embodiments of the disclosure, which will be described more fully hereinafter with reference to the accompanying drawings. The disclosure should be understood as not limited to particular embodiments but including all the modifications, equivalents and replacements which belong to technical scope and ideas of the disclosure.

In the descriptions of embodiments, detailed explanations of the related art are omitted when it is deemed that they may unnecessarily obscure the essence of the disclosure. Ordinal numbers (e.g., first, second, etc.) used in explanations of the specification are only to distinguish components from one another.

When the term "connected" or "coupled" is used, a component may be directly connected or coupled to another component. However, unless otherwise defined, it is also understood that the component may be indirectly connected or coupled to the other component via another new component.

Throughout the specification, a component expressed with "... unit", "...module", or the like may be a combination of two or more components or may be divided by function into two or more. Each of the components may perform its major function and further perform part or all of a function served by another component. In this way, part of a major function served by each component may be dedicated and performed by another component.

A base station (BS) as herein used may refer to an entity for performing resource allocation for a user equipment (UE) and may be at least one of gNode B, eNode B, Node B (or xNode B, where x represents any letter including 'g' and 'e'), a radio access unit, a BS controller, a satellite, an airborne vehicle or a node in a network. A UE may be interchangeably used with a terminal, and may include a mobile station (MS), a vehicle, a satellite, an airborne vehicle, a cellular phone, a smart phone, a computer, or a multimedia system having a communication function. In the disclosure, a downlink (DL) may refer to a radio transmission path for a signal transmitted from a BS to a UE, and an uplink (UL) may refer to a radio transmission path for a signal transmitted from a UE to a BS.

Although the following embodiments of the disclosure will be focused on the long term evolution (LTE), LTE-Advanced (LTE-A) or a fifth generation (5G) system as an example, they may be applied to other communication systems with similar technical backgrounds or channel types. For example, the other communication systems may include a 5G-Advanced, new radio (NR)-Advanced or sixth generation (6G) mobile communication technology developed after the 5G mobile communication technology (or NR), and the term 5G may be a concept including the existing LTE, LTE-A and other similar services. Furthermore, embodiments of the disclosure will also be applied to different communication systems with some modifications to such an extent that does not significantly deviate the scope of the disclosure when judged by skilled people in the art.

It will be understood that each block and combination of the blocks of a flowchart may be performed by computer program instructions. The computer program instructions may be loaded onto a processor of a universal computer, a special-purpose computer, or other programmable data processing equipment, and thus they generate means for performing functions described in the block(s) of the flowcharts when executed by the processor of the computer or other programmable data processing equipment. The computer program instructions may also be stored in computer-executable or computer-readable memory that may direct the computers or other programmable data processing apparatus to function in a particular manner, such that the instructions stored in the computer-executable or computer-readable memory may produce an article of manufacture including instruction means that perform the functions specified in the flowchart blocks(s). The computer program instructions may also be loaded onto the computer or other programmable data processing apparatus to cause a series of operational steps to be performed on the computer or other programmable apparatus to produce a computer implemented process such that the instructions that are executed on the computer or other programmable apparatus provide operations for implementing the functions specified in the flowchart block(s).

Furthermore, each block may represent a part of a module, segment, or code including one or more executable instructions to perform particular logic function(s). It is noted that the functions described in the blocks may occur out of order in some alternative embodiments. For example, two successive blocks may be performed substantially at the same time or in reverse order depending on the corresponding functions.

In the following description, the terms referring to broadcast information, control information, state changes (e.g., events), network entities, messages, and components of an apparatus, the terms related to communication coverage, etc., are mentioned for convenience of explanation. The disclosure is not limited to the terms as will be used in the following description, and may use different terms having the same meaning in a technological sense.

In the following description, for convenience of explanation, terms and definitions used in the most recent standards among the currently existing communication standards, i.e., in the LTE and NR standards defined in the 3rd Generation Partnership Project (3GPP) will be used. The disclosure is not, however, limited to the terms and definitions, and may be equally applied to any systems that conform to other standards.

As a future communication system after the LTE, the 5G communication system needs to freely reflect various demands from users and service providers and thus support services that simultaneously meet the various demands. The services considered for the 5G communication system may include enhanced Mobile Broadband (eMBB), massive Machine Type Communication (mMTC), Ultra Reliability Low Latency Communication (URLLC), etc.

The eMBB is aimed at providing more enhanced data rates than the LTE, LTE-A or LTE-Pro may support. For example, in the 5G communication system, the eMBB is required to provide 20 Gbps peak data rate in DL and 10 Gbps peak data rate in UL in terms of a single BS. Furthermore, the 5G communication system needs to provide increasing user perceived data rate while providing the peak data rate. To satisfy these requirements various technologies for transmission or reception including multiple-input multiple-output (MIMO) transmission technologies are required to be more enhanced. While the present LTE uses up to 20 MHz transmission bandwidth in the 2 GHz band for signal transmission, the 5G communication system may use frequency bandwidth wider than 20 MHz in the 3 to 6 GHz band or in the 6 GHz or higher band, thereby satisfying the data rate required by the 5G communication system.

At the same time, in the 5G communication system, mMTC is considered to support an application service such as an Internet of Things (IoT) application service. In order for the mMTC to provide the IoT efficiently, support for access from massive number of terminals in a cell, enhanced coverage of the terminal, extended battery time, reduction in terminal price, etc., are required. Because the IoT is equipped in various sensors and devices to provide communication functions, it may be supposed to support a large number of UEs in a cell (e.g., 1,000,000 terminals/km$^2$). Furthermore, a UE supporting the mMTC is more likely to be located in a shadow area, such as underground of a building, which might not be covered by a cell by the nature of the service, so the mMTC requires an even larger coverage than expected for other services provided by the 5G communication system. The UE supporting the mMTC needs to be a low-cost UE, and requires quite long battery life time such as 10 to 15 years because the battery in the UE is hard to be changed frequently.

Finally, URLLC is a mission critical cellular-based wireless communication service. For example, the URLLC may provide services used for remote control over robots or machinery, industrial automation, unmanned aerial vehicle, remote health care, emergency alert, etc. Accordingly, communication offered by the URLLC requires very low latency and very high reliability. For example, URLCC services need to satisfy sub-millisecond (less than 0.5 millisecond) air interface latency and simultaneously require a packet error rate equal to or lower than $10^{-5}$. Hence, for the URLLC services, the 5G system needs to provide a smaller transmit time interval (TTI) than for other services, and simultaneously requires a design that allocates a wide range of resources for a frequency band to secure reliability of the communication link.

To satisfy various requirements for respective services, a system operation method such as of adjusting beams or changing frequency bands may be taken into account. Under this situation, there may be various channel environments for the respective beams/frequency bands.

Channel estimation is an important factor in system performance. The UE may estimate a channel based on a reference signal (RS) transmitted from the BS. There may be various RSs transmitted from the BS to the UE for channel estimation, but in the disclosure, a channel state information (CSI) RS (CSI-RS) will be taken as an example for convenience of explanation. The UE may estimate a channel between the BS and the UE based on the CSI-RS. Furthermore, the UE may report information about the estimated channel, i.e., CSI, to the BS.

Traditionally, CSI reporting on a codebook basis has been supported. The codebook method causes information loss in the process of quantizing the information about the estimated channel state. A method of reducing the information loss by configuring the codebook variously, but this increases the size of the codebook to be transmitted, leading to an increase in size of time-frequency resources used for CSI reporting.

For this reason, a method of reporting compressed CSI on an autoencoder basis are being discussed. The autoencoder is a neural network model comprised of an encoder for compressing input data and a decoder for obtaining output data by reconstructing the compressed data to be equal to the input data.

In the specification, the encoder may include an AI model for encoding comprised of a neural network that performs compression on the input data. The decoder may include an AI model for decoding comprised of a neural network that performs reconstruction of the compressed data.

Furthermore, in the specification, the neural network (NN) is an AI model that simulates cranial nerves, and is not limited to an AI model that uses a particular algorithm.

Moreover, in the specification, a parameter is a value used in the operation process on each layer that makes up the NN, and may include, for example, a weight used when an input value is applied to a certain operation expression. The parameter may be expressed in the form of a matrix. The parameter is a value set as a result of training, which may be updated with extra training data as needed.

In the specification, NN configuration information is information relating to elements that make up the NN, and includes the parameter. Using the NN configuration information, the AI model for encoding or the AI model for decoding may be configured. The NN configuration information may include information about at least one of the number of convolution layers included in the NN, the number of filter kernels for each convolution layer, and a parameter of each filter kernel.

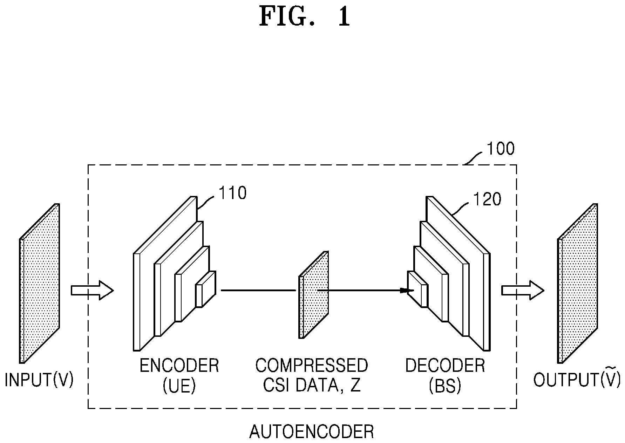

FIG. 1 is a diagram for describing a CSI compression and reconstruction procedure using an autoencoder.

Referring to FIG. 1, an autoencoder 100 may include an encoder 110 and a decoder 120. The encoder 110 may include an AI model for encoding, and the decoder 120 may include an AI model for decoding. However, this is merely an example, and the encoder 110 and the decoder 120 may further include a preprocessor or post-processor for performing a function to enhance the performance of the CSI compression and reconstruction, in addition to the AI model for encoding and the AI model for decoding.

The encoder 110 may be implemented in a UE. The UE may estimate a channel between the UE and a BS based on a CSI-RS received from the BS. The UE may identify the CSI-RS transmitted by the BS, and accordingly, estimate a channel through which the CSI-RS has gone, based on the received signal and the CSI-RS. The channel estimated by the UE may be represented in a channel matrix $\hat{H}$ as in the following equation 1:

【Equation 1】

$$\overset{\Lambda}{H}(i,k) = \begin{bmatrix} h_{1,1}(i,k) & h_{1,2}(i,k) & \dots & h_{1,N_t}(i,k) \\ h_{2,1}(i,k) & h_{2,2}(i,k) & \dots & h_{2,N_t}(i,k) \\ \vdots & \vdots & \ddots & \vdots \\ h_{N_r,1}(i,k) & h_{N_r,2}(i,k) & \dots & h_{N_r,N_t}(i,k) \end{bmatrix}$$

In the channel matrix $\hat{H}$ of equation 1, $N_r$ denotes the number of receive antennas, $N_t$ denotes the number of transmit antennas, i denotes a symbol index, and k denotes an index of a subcarrier. $h_{r,t}(i,k)$ is an element of the channel matrix $\hat{H}$, meaning a channel state between an r-th receive antenna and a t-th transmit antenna in an i-th symbol and with a k-th subcarrier.

The UE may decompose the channel matrix $\hat{H}$ by using singular value decomposition (SVD). Through the SVD, the channel matrix $\hat{H}$ may be represented by the product of three matrices as in the following equation 2:

【Equation 2】

$$\overset{\Lambda}{H} = UDV^H$$

In equation 2, U and V indicate unitary matrices, and D is a diagonal matrix including singular values which are not negative.

Furthermore, the UE may decompose the channel matrix $\hat{H}$ as in equation 3 by using eigen value decomposition (EVD). Through the EVD, the channel matrix $\hat{H}$ may be represented as in the following equation 3:

【Equation 3】

$$\overset{\Lambda}{H}\overset{\Lambda}{H} = (U D V^H)(U D V^H)^H = U \sum {\sum}^T U^H$$

$$\overset{\Lambda}{H}\overset{\Lambda}{H} = (U D V^H)^H (U D V^H)^H = V \sum {\sum}^T V$$

In equation 3, U and V indicate unitary matrices, and D is a diagonal matrix including singular values which are not negative.

As the channel matrix $\hat{H}$ may be determined when information about the V is obtained, the traditional CSI reporting is performed in the way that the UE transmits, to the BS, an index of the most similar codebook to the V.

In a case of using an autoencoder to transmit compressed V, it may provide information about a channel state to the BS by using less resources than transmitting the V while avoiding information loss that would occurs when transmitting the codebook.

The UE may input V to the encoder 110 and obtain an output z, which is the compressed V. The UE may transmit z to the BS in time-frequency resources. The decoder 120 including the AI model for decoding may run in the BS 120. The BS may input the received z to the decoder 120, and obtain $\tilde{V}$ as an output. In the specification, V may be described as CSI data and z may be described as compressed CSI data.

The AI model for encoding of the encoder 110 and the AI model for decoding of the decoder 120 may be jointly trained such that $\tilde{V}$ reconstructed from z may have a similar value to the input V. For example, a back propagation procedure may be performed by using the loss information, a difference between the reconstructed $\tilde{V}$ and the input V. Training may be performed in the way of updating the NN configuration information of the AI model for encoding and the NN configuration information of the AI model for decoding so that the reconstructed $\tilde{V}$ has a similar value to the input V. For example, the BS may obtain CSI data in advance through e.g., a field test or obtain the CSI data received from a plurality of UEs in real time, and perform training based on the obtained CSI data.

The NN configuration information of the AI model for encoding may include information about at least one of the number of convolution layers included in the AI model for encoding, the number of filter kernels for each convolution layer, a size of the filter kernel for each convolution layer, a parameter of each filter kernel, or a parameter of an activation layer. The NN configuration information of the AI model for decoding may include information about at least one of the number of convolution layers included in the AI model for decoding, the number of filter kernels for each convolution layer, a size of the filter kernel for each convolution layer, a parameter of each filter kernel, or a parameter of an activation layer.

The AI model for encoding and the AI model for decoding of the autoencoder may be trained in the BS or a separate server. Furthermore, the BS or the server may store the NN configuration information of the AI model for encoding and the NN configuration information of the AI model for decoding. The UE may receive the NN configuration information of the AI model for encoding from the BS or the server.

The AI model suffers performance deterioration when characteristics of data or the dataset trained before is changed due to a change in network or channel condition. In this case, to increase the performance of the AI model, a different AI model that fits the environment is used or a fine tuning process of additionally training some layers is required.

In the meantime, the structure of the auto-encoder used in CSI compression includes the AI model for encoding and the AI model for decoding at the UE and BS sides, respectively. Even when the performance of the autoencoder deteriorates due to a change in network or channel condition or data characteristics, it may be hard to determine whether V is reconstructed properly because the AI model for decoding of the BS to reconstruct V receives only z. In embodiments of the disclosure, to minimize the performance deterioration of the autoencoder, a CSI profiling method, by which the BS collects a V value from the UE at a certain point in time/situation and uses the collected V to analyze the performance of the AI model in the current environment, is provided. In the disclosure, the BS may change or perform fine tuning on the AI model for encoding that runs in the UE through the CSI profiling.

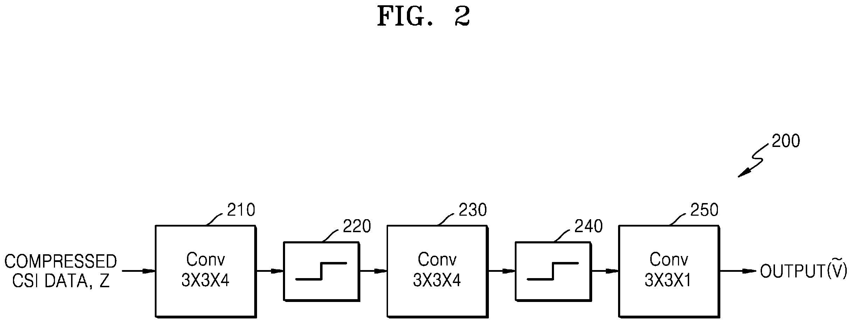

FIG. 2 is a diagram for describing an example of a method by which a BS reconstructs compressed CSI data.

Referring to FIG. 2, the BS may input compressed CSI data z received from the UE to a first convolution layer 210 of the AI model for decoding. In the convolution operation procedure of the first convolution layer 210, multiplication of each element of the compressed CSI data z and each filter kernel value may be performed, and a value of combination (e.g., add operation) of the resultant values of the multiplication may be output as a feature map. The feature maps output from the first convolution layer 210 are input to a first activation layer 220.

The first activation layer 220 may give non-linear characteristics to each feature map. The first activation layer 220 may include a Sigmoid function, a Tanh function, a rectified linear unit (ReLU) function, etc., without being limited thereto. The giving of the non-linear characteristics by the first activation layer 220 refers to changing some sample values of the feature map, which are outputs of the first convolution layer 210, and outputting the result. In this case, the changing is performed by applying non-linear characteristics.

The first activation layer 220 determines whether to forward the sample values of the feature maps output from the first convolution layer 210 to the second convolution layer 230. For example, some of the sample values of the feature maps are activated by the first activation layer 220 and forwarded to the second convolution layer 230, and some sample values are inactivated by the first activation layer 220 and not forwarded to the second convolution layer 230. The unique characteristics of the compressed CSI data z represented by the feature maps are emphasized by the first activation layer 220.

Feature maps 225 output from the first activation layer 220 are input to the second convolution layer 230. '3X3x4' marked on the second convolution layer 230 indicates as an example that convolution on the input feature maps is performed by using four filter kernels each having a size of 3x3. The output of the second convolution layer 230 is input to a second activation layer 240. The second activation layer 240 may give non-linear characteristics to the input data.

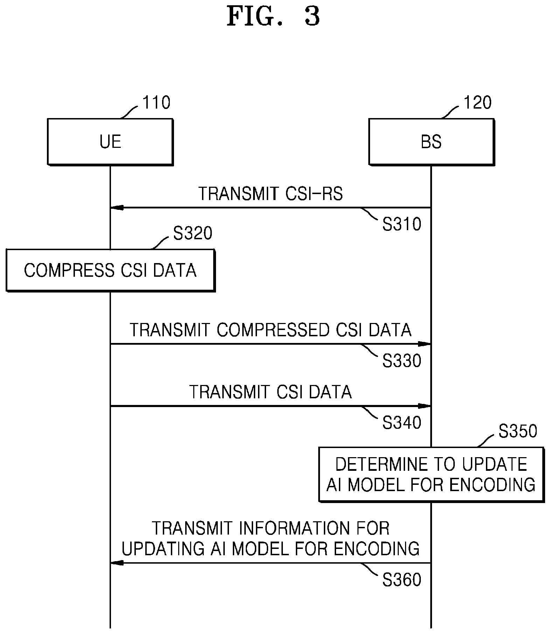

The feature maps output from the second activation layer 240 are input to a third convolution layer 250. '3X3x1' marked on the third convolution layer 250 shown in FIG. 3 indicates as an example that convolution is performed to have one output by using one filter kernel having a size of 3x3. The third convolution layer 250 is a layer for outputting reconstructed CSI data $\tilde{V}$, which uses the one filter kernel to generate one output.

Although FIG. 2 illustrates an AI model 200 for decoding including three convolution layers 210 230 and 250 and two activation layers 220 and 240, it is merely an example and the number of convolution layers and the number of activation layers may vary depending on the implementation. Furthermore, the AI model for decoding 200 may include other layers such as a fully connected layer, a pooling layer, etc., in addition to the convolution layer. Moreover, depending on the implementation, the AI model for decoding 200 may be implemented by a recurrent neural network (RNN) In this case, the CNN structure of the AI model for decoding 200 according to the disclosure is changed to the RNN structure.

An AI model for encoding (not shown) may have a symmetrical structure with the AI model for decoding 200 as described in connection with FIG. 2. It is, however, merely an example, and at least one of the number of layers between the AI model for encoding (not shown) and the AI model for decoding 200, layer types or parameters may be modified according to the implementation.

FIG. 3 is a flowchart for describing a method of performing CSI profiling, according to an embodiment.

In operation S310, the BS 120 may transmit a CSI-RS to the UE 110. The CSI-RS may be divided by the transmission method into a periodic CSI-RS, a semi-persistent CSI-RS and an aperiodic CSI-RS. The BS 120 may set a method of transmitting the CSI-RS to the UE 110 in higher layer signaling (e.g., a radio resource control (RRC) signaling), MAC-CE signaling or L1 signaling, or a combination of two or more of the aforementioned signaling.

In operation S320, the UE 110 may perform compression of CSI data estimated based on the CSI-RS. The UE 110 may estimate a channel between the UE and the BS based on the CSI-RS received from the BS 120. The channel estimated by the UE may be represented in a channel matrix $\hat{H}$. The UE 100 may obtain V from the channel matrix $\hat{H}$ by using SVD or EVD as described above. The V will now be described as CSI data.

An AI model for encoding that is jointly trained with an AI model for decoding may run in the UE 110. The UE 110 may receive NN configuration information for the AI model for encoding from the BS 120 or an external server. For example, the UE 110 may receive the NN configuration information through higher layer signaling, and configure a parameter for the AI model for encoding based on the received NN configuration information. The UE 110 may obtain compressed CSI data by inputting the CSI data to the AI model for encoding.

In operation S330, the UE 110 may transmit the compressed CSI data to the BS 120. The UE 110 may transmit the compressed CSI data to the BS 120 periodically, semi-persistently or aperiodically.

In operation S340, the UE 110 may transmit the CSI data before compression is performed, to the BS 120 based on a preset condition. In an embodiment, the UE 110 may transmit the CSI data before compression is performed, to the BS 120 based on a request of the BS 120. In another embodiment, the UE 110 may transmit the CSI data before compression is performed, to the BS 120 based on a preset interval. The interval for transmitting the CSI data may be set in higher layer signaling, MAC-CE signaling or L1 signaling, or a combination of two or more of the signalings. For example, the UE 110 may receive estimation configuration information including information regarding channel periodicity from the BS through higher layer signaling.

In another embodiment, the UE 110 may transmit the CSI data to the BS 120 when detecting a change in channel state or detecting deterioration of decoding performance. For example, the UE 110 may transmit, to the BS 120, pieces of CSI data corresponding to M of the compressed pieces of CSI data recently transmitted to the BS. In this case, the value of M may be set for the UE 110 according to higher layer signaling, MAC-CE or L1 signaling, or a combination of two or more of the signalings.

In another embodiment, the UE 110 may transmit, to the BS 120, a request to update the AI model for encoding, which triggers CSI profiling to be performed, when detecting a change in channel state or detecting deterioration of decoding performance. In response to the BS 120 receiving the request to update the AI model for encoding from the UE110, the UE 110 may transmit the CSI data to the BS 120 through a physical uplink shared channel (PUSCH) or a physical uplink control channel (PUCCH).

In operation S350, the BS 120 may determine to update the AI model for encoding. The BS 120 may compare the CSI data received from the UE 110 with CSI data reconstructed with the use of the AI model for decoding based on the compressed CSI data from the UE 110.

The BS 120 may identify that there is an error in the compressed CSI data when a difference between the reconstructed CSI data and the received CSI data is equal to or greater than a preset threshold. In the case of identifying that there is the error in the compressed CSI data, the BS 120 may determine to update the AI model for encoding.

In operation S360, the BS 120 may transmit, to the UE 110, information for updating the AI model for encoding.

In an embodiment, the BS 120 may request the UE 110 to change the AI model for encoding with the information for updating the AI model for encoding. The BS 120 may store NN configuration information for each AI model for encoding. The NN configuration information that optimizes performance of compression and reconstruction of the CSI data may be different depending on the channel characteristics. Hence, the BS 120 may request the UE 110 to change the AI model for encoding in order to improve the performance of compression and reconstruction of the CSI data. In this case, the request to change the AI model for encoding may include the NN configuration information for the AI model for encoding to be applied through the change or an indicator to indicate the NN configuration information.

In another embodiment, the BS 120 may direct the UE 110 to train the AI model for encoding with the information for updating the AI model for encoding. The direction to train the AI model for encoding may include a direction to perform training with a weight for certain CSI data.

In another embodiment, when determining that there is an error in a particular portion of the compressed CSI data, the BS 120 may direct increasing the number of layers in a particular area of the AI model for encoding to which CSI data related to the error or a portion of the CSI data related to the error is input. For example, when a mean square error (MSE) received in a certain sub-band is equal to or greater than a certain level, increasing the number of layers in an area of the AI model for encoding related to the certain sub-band may be directed. For this, the BS 120 may transmit, to the UE 110, an indicator to indicate the CSI data related to the error. By indicating the CSI data related to the error, fine tuning may be performed in the way of updating some layers or some parameters of the AI model for encoding associated with the indication.

In another embodiment, the BS 120 may train the AI model for encoding and the AI model for decoding so that an error between the received CSI data and the reconstructed CSI data becomes less than a preset threshold. On receiving CSI data for each of a plurality of pieces of compressed CSI data from the UE 110, the BS 120 may train the AI model for encoding and the AI model for decoding based on the receiving. The BS 120 may transmit, to the UE 110, NN configuration information for the updated AI model for encoding as a result of the training.

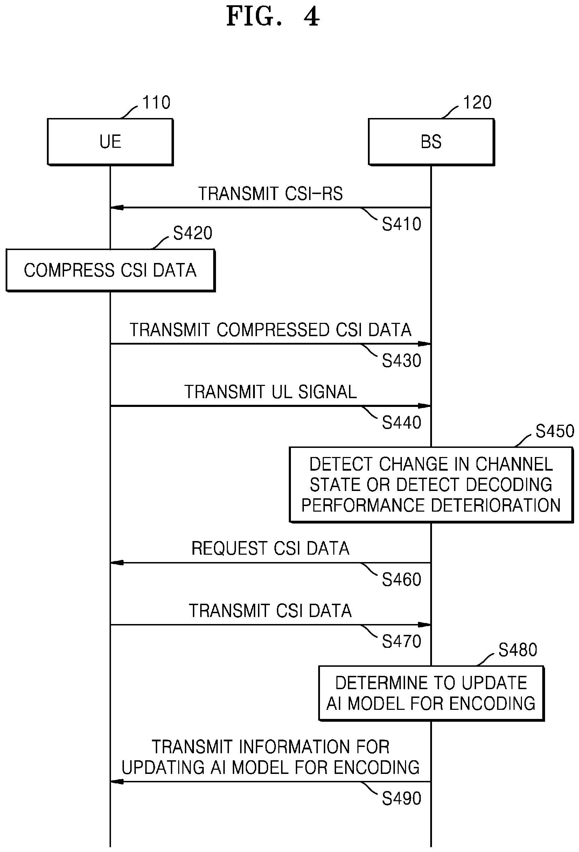

FIG. 4 is a flowchart for describing a method of performing CSI profiling at the request of a BS, according to an embodiment.

In operation S410, the BS 120 may transmit a CSI-RS to the UE 110.

In operation S420, the UE 110 may perform compression of CSI data estimated based on the CSI-RS. The UE 110 may obtain a channel matrix $\hat{H}$ representing a channel between the UE and the BS based on the received CSI-RS. The CSI data may be V obtained from the channel matrix $\hat{H}$ by using the SVD or EVD. The UE 110 may obtain compressed CSI data by inputting the CSI data to the AI model for encoding.

In operation S430, the UE 110 may transmit the compressed CSI data to the BS 120.

In operation S440, the UE 110 may transmit an UL signal to the BS 120. The UE 110 may transmit the UL signal in a resource allocated from the BS.

In operation S450, the BS 120 may detect a change in channel state or deterioration of decoding performance based on the UL signal. The UL signal may be transmitted from the UE to the BS on the PUSCH or PUCCH. In an embodiment, when the decoding performance of the data received through the UL signal fails to satisfy a preset threshold, the BS 120 may determine that the decoding performance has been deteriorated. For example, when a bit error rate (BER) of the received data is equal to or greater than a threshold, the BS 120 may determine that the decoding performance has been deteriorated. In another embodiment, the BS 120 may detect a change in channel state as a result of the receiving of the UL signal. For example, the BS 120 may detect the change in channel state by estimating a UL channel based on a sounding reference signal (SRS) received from the UE 110. The change in channel state may refer to a change in at least one property of Doppler spread, Doppler shift, average delay or delay spread, which is, however, merely an example and the channel property is not limited thereto.

In operation S460, the BS 120 may transmit a request for CSI data to the UE 110. When the BS 120 receives a plurality of pieces of compressed CSI data from the UE 110, the request for the CSI data may include an indicator to specify CSI data corresponding to at least one compressed CSI data among the plurality of pieces of compressed CSI data. The indicator may include, for example, N bits of a value indicating the number of the pieces of CSI data. This means to transmit all the recently transmitted $2^N+1$ pieces of compressed CSI data or some of 1~ $2^N+1$ pieces of CSI data. In another example, the indicator may include a timestamp that may specify CSI data. With this, pieces of CSI data corresponding to the compressed CSI data reported at a time designated by the timestamp may be specified. In another example, the indicator may include an identifier that may specify the CSI data.

Furthermore, the request for CSI data may include an indicator to specify a portion of the CSI data. The CSI data may be a matrix whose dimension is determined according to the number of BS antennas and the number of sub-bands. Information specifying at least one of a row or a column of the matrix may be included in the indicator.

In operation S470, the UE 110 may transmit the requested CSI data to the BS 120. The UE 110 may identify at least one of the plurality of pieces of CSI data based on the indicator included in the request for CSI data. Furthermore, the UE 110 may identify a portion of the CSI data based on the indicator included in the request for CSI data. The UE 110 may transmit the CSI data to the BS 120 based on the identifying.

In operation S480, the BS 120 may determine to update the AI model for encoding based on the received CSI data. The BS 120 may identify that there is an error in the compressed CSI data when a difference between the reconstructed CSI data and the received CSI data is equal to or greater than a preset threshold. In the case of identifying that there is an error in the compressed CSI data, the BS 120 may determine to update the AI model for encoding.

In operation S490, the BS 120 may transmit, to the UE 110, information for updating the AI model for encoding. In an embodiment, the BS 120 may request the UE 110 to change the AI model for encoding. In another embodiment, the BS 120 may direct the UE 110 to train the AI model for encoding with the information for updating the AI model for encoding. In another embodiment, when determining that there is an error in a particular portion of the compressed CSI data, the BS 120 may direct increasing the number of layers in a particular area of the AI model for encoding to which CSI data related to the error or a portion of the CSI data related to the error is input. In another embodiment, the BS 120 may train the AI model for encoding and the AI model for decoding through a training device in the BS 120 so that the error between the received CSI data and the reconstructed CSI data is less than the preset threshold. The BS 120 may transmit, to the UE 110, NN configuration information for the updated AI model for encoding as a result of the training.

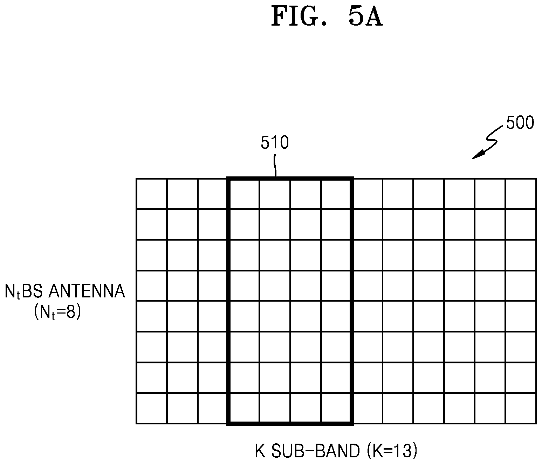

FIG. 5A is a diagram for describing a method of specifying a portion of CSI data, according to an embodiment.

Referring to FIG. 5A, CSI data may be a matrix V comprised of Nt x K complex numbers, where Nt may be the number of antennas of the BS and K may be the number of subcarriers or sub-bands.

The BS may transmit, to the UE, an indicator 'partition V' that may specify a portion of the V. In a case that the partition V is deactivated, the whole matrix V comprised of Nt x K complex numbers may be transmitted. In a case that the partition V is activated and includes information about a partial range of Nt and a partial range of K, the UE may transmit a portion of the V corresponding to the information to the BS.

For example, for V including 8x13 complex numbers, data transmission of some sub-bands may be indicated in the form of indexes. In a case of receiving indexes 4, 5, 6 and 7 of K through the partition V, the UE may transmit a portion 510 corresponding to indexes 4, 5, 6 and 7 of K among the complex numbers that make up the V to the BS.

FIG. 5A is a diagram for describing a method of specifying a portion of CSI data, according to an embodiment.

Referring to FIG. 5A, CSI data may be a matrix V comprised of Nt x K complex numbers, where Nt may be the number of antennas of the BS and K may be the number of subcarriers or sub-bands.

The BS may transmit, to the UE, an indicator 'partition V' that may specify a portion of the V. In a case that the partition V is deactivated, the whole matrix V comprised of Nt x K complex numbers may be transmitted. In a case that the partition V is activated and includes information about a partial range of Nt and a partial range of K, the UE may transmit a portion of the V corresponding to the information to the BS.

For example, for V including 8x13 complex numbers, data transmission of some sub-bands may be indicated in the form of indexes. In a case of receiving indexes 4, 5, 6 and 7 of K through the partition V, the UE may transmit a portion 510 corresponding to indexes 4, 5, 6 and 7 of K among the complex numbers that make up the V to the BS.

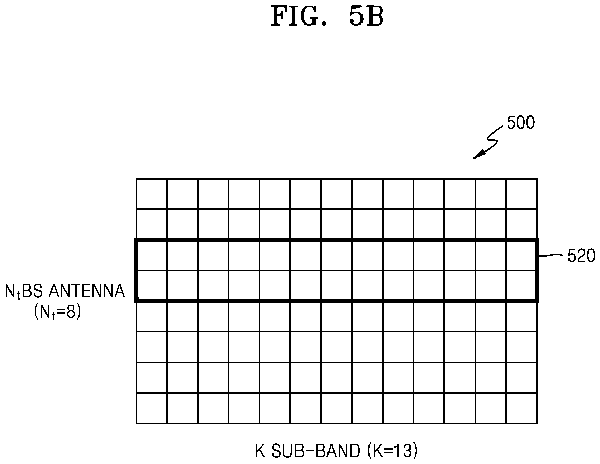

FIG. 5B is a diagram for describing a method of specifying a portion of CSI data, according to an embodiment.

Referring to FIG. 5B, CSI data may be a matrix V comprised of Nt x K complex numbers, where Nt may be the number of antennas of the BS and K may be the number of subcarriers or sub-bands.

The BS may transmit, to the UE, an indicator 'partition V' that may specify a portion of the V. For example, for V including 8x13 complex numbers, data transmission of some sub-bands may be indicated in the form of indexes. In a case of receiving indexes 3 and 4 of Nt through the partition V, the UE may transmit a portion 520 corresponding to indexes 3 and 4 of Nt among the complex numbers that make up the V to the BS.

It is, however, merely an example, and the partition V may include indexes in coordinates. For example, in a case that the partition V includes an index (3, 4), complex numbers with Nt equal to 3 and K equal to 4 may be transmitted to the BS.

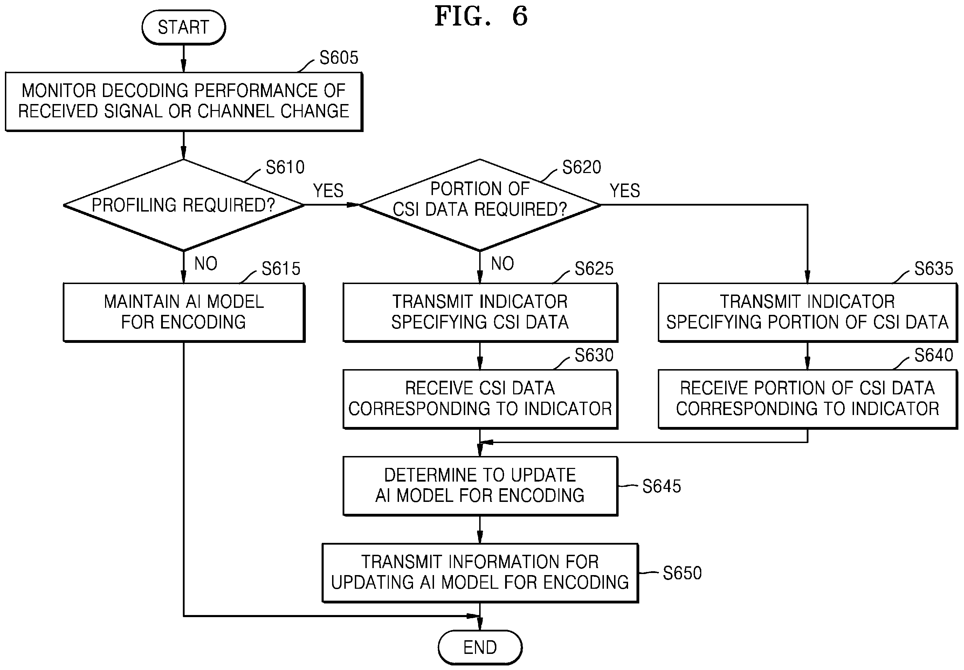

FIG. 6 is a flowchart for describing operation of a BS for CIS profiling, according to an embodiment.

In operation S605, the BS may monitor decoding performance or a change in channel of a received signal.

In operation S610, the BS may determine whether CSI profiling is required based on a result of the monitoring.

In operation S615, the BS may maintain the AI model for encoding. The BS may determine that CSI profiling is not required when the decoding performance of the received signal satisfies a preset threshold or the change in channel state is within a preset range. The BS may maintain the AI model for encoding.

In operation S620, the BS may determine whether a portion of CSI data is required. The BS may determine that CSI profiling is required when the decoding performance of the received signal does not satisfy the preset threshold or the change in channel state is out of a preset range. The BS may determine whether a portion of CSI data is required for CSI profiling.

In operation S625, when determining that the portion of the CSI data is not required, the BS may transmit an indicator that specifies the CSI data to the UE. When the BS 120 receives a plurality of pieces of compressed CSI data from the UE, an indicator to specify CSI data corresponding to at least one compressed CSI data among the plurality of pieces of compressed CSI data may be transmitted to the UE.

In operation S630, the BS may receive a portion of the CSI data corresponding to the indicator.

In operation S635, when determining that a portion of the CSI data is required, the BS may transmit an indicator that specifies a portion of the CSI data to the UE. For example, when determining that a certain sub-band or a channel state of the antenna is changed, the BS may determine that a portion of the CSI data corresponding to the sub-band or the antenna is required.

In operation S640, the BS may receive the portion of the CSI data corresponding to the indicator.

In operation S645, the BS may determine to update the AI model for encoding based on the received CSI data or the received portion of the CSI data.

In operation S650, the BS may transmit, to the UE, information for updating the AI model for encoding.

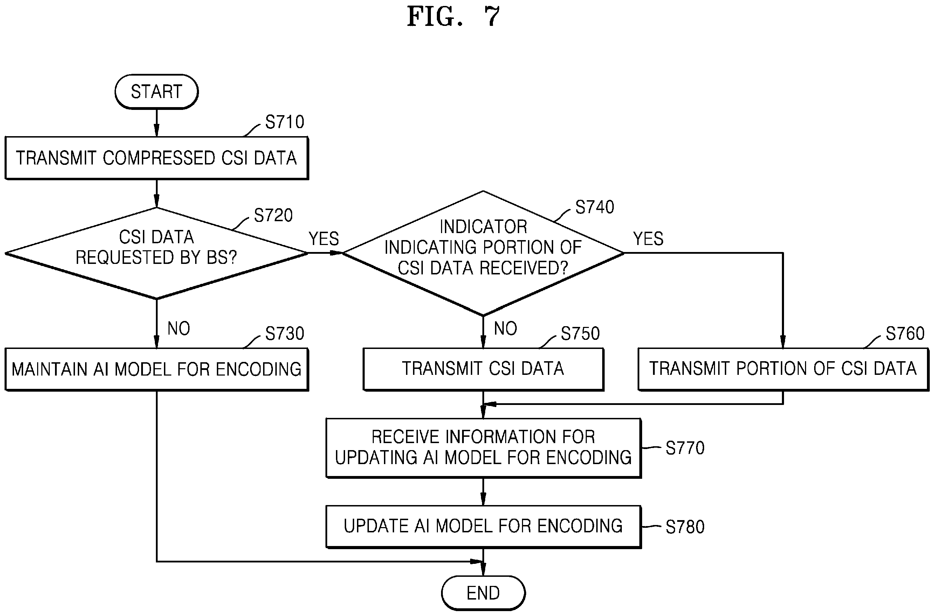

FIG. 7 is a flowchart for describing operation of a UE for CSI profiling, according to an embodiment.

In operation S710, the UE may transmit compressed CSI data to the BS. The UE may transmit the compressed CSI data to the BS periodically, semi-persistently or aperiodically according to settings.

In operation S720, the UE may identify whether a request for CSI data is received from the BS.

In operation S730, the UE may maintain the AI model for encoding when no request for CSI data is received from the BS.

In operation S740, when the request for CSI data is received from the BS, the UE may determine whether an indicator that indicates a portion of CSI data is received. For example, the UE may determine whether the request for CSI data includes the partition V indicator.

In operation S750, the UE may transmit CSI data to the BS, when no indicator indicating a portion of CSI data is received. The request for CSI data may include an index or timestamp that specifies at least one of a plurality of pieces of CSI data or an identifier of the CSI data. The UE may transmit CSI data corresponding to the index or timestamp or the identifier of the CSI data to the BS.

In operation S760, the UE may transmit a portion of CSI data, when the indicator indicating the portion of CSI data is received. In the request for CSI data, the partition V indicator may be activated. Furthermore, the partition V indicator may include indexes for specifying at least some of complex numbers that make up the V. The index may be an integer value, a range of integers, or coordinates comprised of integer values to specify at least one of each row or column of the V. The UE may transmit a portion of the CSI data corresponding to the partition V indicator to the BS.

In operation S770, the UE may receive information for updating the AI model for encoding.

In operation S780, the UE may update the AI model for encoding based on the received information.

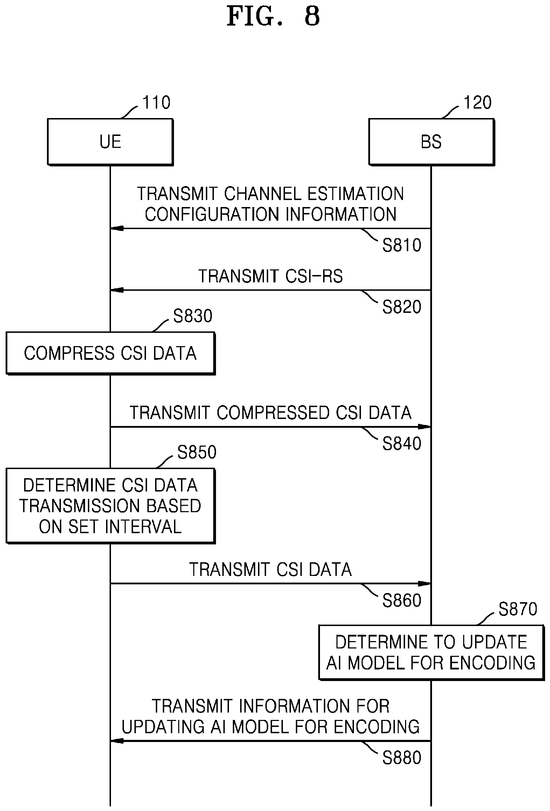

FIG. 8 is a flowchart for describing a method of performing CSI profiling at preset intervals, according to an embodiment.

In operation S810, the BS 120 may transmit channel estimation configuration information to the UE 110. The channel estimation configuration information is information for CSI profiling, which includes information about a method of transmitting CSI data to the BS. For example, information indicating that transmission of CSI data is periodic, semi-persistent or aperiodic may be included. Furthermore, when the transmission of CSI data is periodic, semi-persistent or aperiodic, the channel estimation configuration information may include information about an interval to transmit CSI data. When the transmission of CSI data is semi-persistent and activated by a medium access control (MAC) control element (CE), the CSI data may be transmitted according to the set interval.

Moreover, in an embodiment, the channel estimation configuration information may be configured for the UE 110 during initial access or a handover procedure.

In operation S820, the BS 120 may transmit a CSI-RS to the UE 110.

In operation S830, the UE 110 may perform compression of CSI data estimated based on the CSI-RS. The UE 110 may obtain a channel matrix $\hat{H}$ representing a channel between the UE and the BS based on the received CSI-RS. The CSI data may be V obtained from the channel matrix $\hat{H}$ by using the SVD or EVD. The UE 110 may obtain compressed CSI data by inputting the CSI data to the AI model for encoding.

In operation S840, the UE 110 may transmit the compressed CSI data to the BS 120.

In operation S850, the UE 110 may determine to transmit the CSI data based on the interval set according to the channel estimation configuration information. For example, when the transmission of CSI data is set to be periodic according to the channel estimation configuration information, the UE 110 may determine to transmit the CSI data at the set intervals. For example, when the interval is set to 4 ms, the UE 110 may determine to transmit the CSI data to the BS 120 at intervals of 4 ms. This is, however, merely an example, and the interval may be set based on various time units such as slots, symbols, etc.

In another example, when the transmission of CSI data is set to be semi-persistent according to the channel estimation configuration information, the UE 110 may identify whether the transmission of CSI data is activated through an MAC CE. The UE 110 may determine to transmit CSI data to the BS 120 at intervals set through the channel estimation configuration information, when the transmission of CSI data is activated through the MAC CE.

The interval set for the UE 110 may be reset by higher layer signaling, MAC CE or L1 signaling.

In operation S860, the UE 110 may transmit CSI data to the BS 120.

In operation S870, the BS 120 may determine to update the AI model for encoding based on the received CSI data. Operation S870 may correspond to operation S350 as described above with reference to FIG. 3.

In operation S880, the BS 120 may transmit, to the UE 110, information for updating the AI model for encoding. Operation S880 may correspond to operation S360 as described above with reference to FIG. 3.

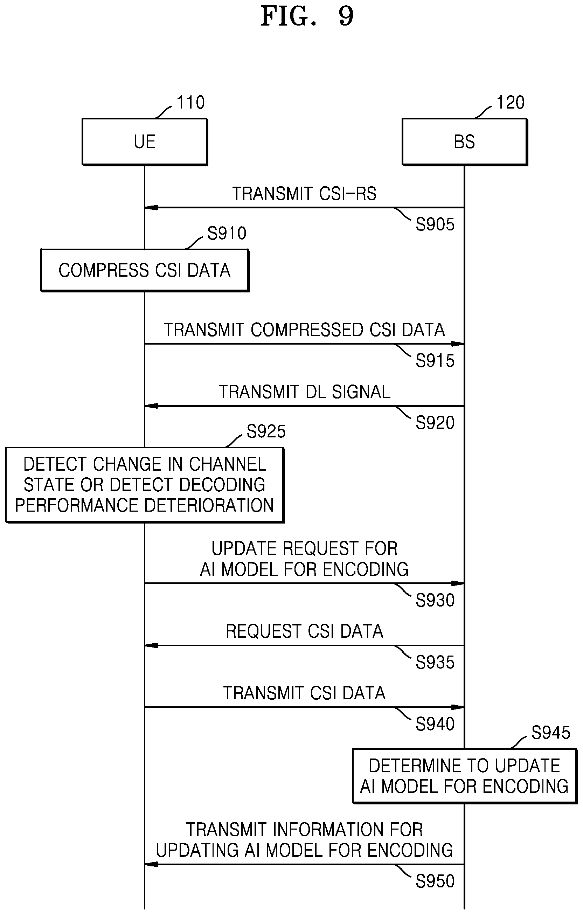

FIG. 9 is a flowchart for describing a method of performing CSI profiling at the request of a UE, according to an embodiment.

In operation S905, the BS 120 may transmit a CSI-RS to the UE 110.

In operation S910, the UE 110 may perform compression of CSI data estimated based on the CSI-RS. The UE 110 may obtain a channel matrix $\hat{H}$ representing a channel between the UE and the BS based on the received CSI-RS. The CSI data may be V obtained from the channel matrix $\hat{H}$ by using the SVD or EVD. The UE 110 may obtain compressed CSI data by inputting the CSI data to the AI model for encoding.

In operation S915, the UE 110 may transmit the compressed CSI data to the BS 120.

In operation S920, the BS 120 may transmit a DL signal to the UE 110. The DL signal 110 may be transmitted to the UE 110 through a PDSCH or a PDCCH.

In operation S925, the UE 110 may detect a change in channel state or deterioration of decoding performance based on the DL signal. In an embodiment, when the decoding performance of the data received through the DL signal fails to satisfy a preset threshold, the UE 110 may determine that the decoding performance has been deteriorated. For example, when a BER of the received data is equal to or greater than a threshold, the UE 110 may determine that the decoding performance has been deteriorated. In another embodiment, the UE 110 may detect a change in channel state as a result of the receiving of the DL signal. For example, the UE 110 may detect a change in channel state through a demodulation reference signal (DMRS). The change in channel state may refer to a change in at least one property of Doppler spread, Doppler shift, average delay or delay spread, which is, however, merely an example and the channel property is not limited thereto.

In operation S930, the UE 110 may request the BS 120 to update the AI model for encoding. When determining that CSI profiling of the BS 120 is required, the UE 110 may request the BS 120 to update the AI model for encoding. For example, the UE 110 may determine that CSI profiling is required when the decoding performance of the received signal does not satisfy the preset threshold or the change in channel state is out of a preset range.

Furthermore, the request to update the AI model for encoding may include a cause value of the update request. For example, an occasion when the decoding performance of the received signal does not satisfy the preset threshold may be defined as event Ax, and an occasion when the change in channel state is out of the preset range may be defined as event Ay. The update request for the AI model for encoding may include an indicator indicating the event Ax or an indicator indicating the event Ay as a cause value. This is merely an example, and the cause value that may be included in the update request for the AI model is not limited to the above example.

In operation S935, the BS 120 may request CSI data from the UE 110. On receiving the update request for the AI model for encoding, the BS 120 may determine CSI data to be requested from the UE 110. For example, when the update request for the AI model for encoding includes the indicator indicating that the event Ax occurs, the BS 120 may request a portion of CSI data associated with deterioration of decoding performance. In another example, when the update request for the AI model for encoding includes the indicator indicating that the event Ay occurs, the BS 120 may request recent $2^{n}+1$ or some pieces of CSI data.

In operation S940, the UE 110 may transmit the CSI data to the BS 120. The UE 110 may transmit the CSI data requested from the BS 120. For example, the UE 110 may transmit the requested portion of CSI data based on the request of the BS 120. In another example, the UE 110 may transmit the recent $2^{n}+1$ pieces of CSI data based on the request of the BS 120.

In operation S945, the BS 120 may determine to update the AI model for encoding. Operation S945 may correspond to operation S350 as described above with reference to FIG. 3.

In operation S950, the BS 120 may transmit, to the UE 110, information for updating the AI model for encoding. Operation S950 may correspond to operation S360 as described above with reference to FIG. 3.

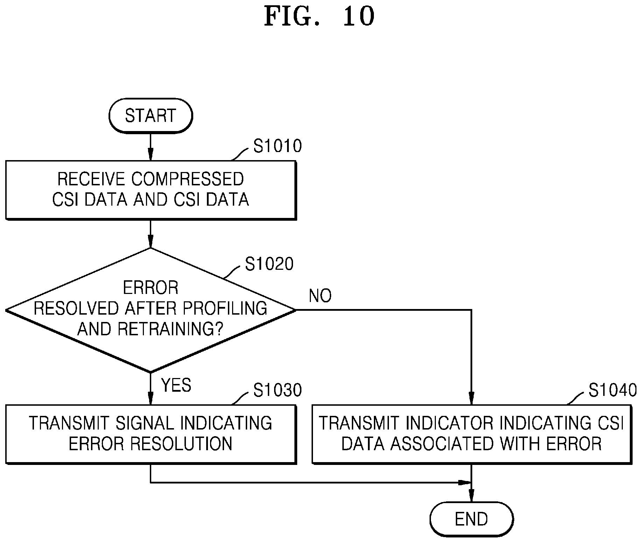

FIG. 10 is a flowchart for describing a method of performing CSI profiling at preset intervals, according to an embodiment.

In operation S1010, the BS may receive compressed CSI data and CSI data before compression. The BS may receive the compressed CSI data from the UE. Furthermore, the BS may receive the CSI data before compression. In an embodiment, the UE may transmit the CSI data before compression is performed to the BS based on a request of the BS. In another embodiment, the UE may transmit the CSI data before compression is performed to the BS based on a preset interval. In another embodiment, the UE may transmit the CSI data to the BS when detecting a change in channel state or detecting deterioration of decoding performance.

In operation S1020, the BS may identify whether an error has been resolved after a CSI profiling and retraining procedure. For example, the BS may identify whether a difference between the reconstructed CSI data and the received CSI data is equal to or greater than a preset threshold. The BS may identify that there is an error in the compressed CSI data when the difference between the reconstructed CSI data and the received CSI data is equal to or greater than the preset threshold. As the BS identifies that there is an error in the compressed CSI data, the BS may train the AI model for encoding based on the at least one CSI data received from the UE. Through the training of the AI model for encoding, the AI model for encoding may be retrained based on the at least one CSI data.

In operation S1030, the BS may transmit, to the UE, a signal indicating that the error is resolved. When determining that the error is resolved as a result of training the AI model for encoding, the BS may transmit, to the UE, a signal including a value of 0 in a profiling result IE to notify the error resolution. For example, when the difference between the reconstructed CSI data and the received CSI data is less than the preset threshold as a result of training the AI model for encoding, the BS may determine that the error is resolved.

In operation S1040, the BS may transmit, to the UE, an indicator indicating CSI data associated with the error. The UE may configure a parameter for an area of the AI model for encoding to which CSI data specified by the indicator is applied such that a high weight is reflected on the CSI data. Furthermore, the UE may trigger online training for the AI model for encoding based on the specified CSI data. For example, the UE may trigger the online training for the AI model for encoding based on the specified CSI data in order to obtain z with which to reconstruct CSI data similar to the input CSI data.

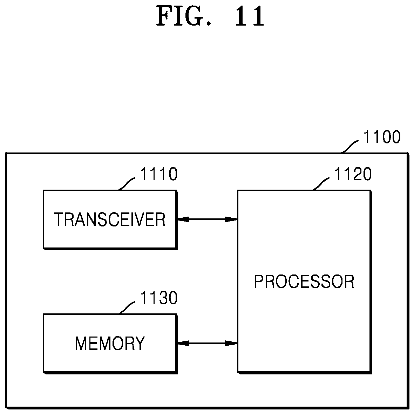

FIG. 11 is a block diagram of a UE, according to an embodiment of the disclosure; and

Referring to FIG. 11, the UE 1100 may include a transceiver 1110, a processor 1120, and a memory 1130. The transceiver 1110, the processor 1120 and the memory 1130 of the UE 1100 may operate according to the aforementioned communication method of the UE 1100. Elements of the UE 1100 are not, however, limited thereto. For example, the UE 1100 may include more or fewer elements than described above. In addition, the transceiver 1110, the processor 1120, and the memory 1130 may be implemented in a single chip. The processor 1120 may include one or more processors.

A receiver and a transmitter of the UE 1100 are collectively referred to as the transceiver 1110, which may transmit or receive signals to or from a BS or a network entity. The signals to be transmitted to or received from the BS or the network entity may include control information and data. For this, the transceiver 1110 may include an RF transmitter for up-converting the frequency of a signal to be transmitted and amplifying the signal and an RF receiver for low-noise amplifying a received signal and downconverting the frequency of the received signal. It is merely an example of the transceiver 1110, and the elements of the transceiver 1110 are not limited to the RF transmitter and RF receiver.

The transceiver 1110 may perform functions for transmitting and receiving signals on a wireless channel. For example, the transceiver 1110 may receive a signal on a wireless channel and output the signal to the processor 1120, and transmit a signal output from the processor 1120 on a wireless channel.

The memory 1130 may store a program and data required for operation of the UE 1100. Furthermore, the memory 1130 may store control information or data included in a signal obtained by the BS. The memory 1130 may include a storage medium such as a read only memory (ROM), a random access memory (RAM), a hard disk, a compact disc ROM (CD-ROM), and a digital versatile disk (DVD), or a combination of storage mediums. Alternatively, the memory 1130 may not be separately present but integrated into the processor 1120. The memory 1130 may include a volatile memory, a non-volatile memory, or a combination of the volatile memory and the non-volatile memory. The memory 1130 may also provide the stored data at the request of the processor 1120.

The processor 1120 may control a series of processes for the UE 1100 to be operated according to the aforementioned embodiments of the disclosure. For example, the processor 1120 may receive control signals and data signals through the transceiver 1110 and process the received control signals and data signals. The processor 1120 may transmit the processed control signal and data signal through the transceiver 1110. The processor 1120 may record data to the memory 1130 or read out data from the memory 1330. The processor 1120 may perform functions of a protocol stack requested by a communication standard. For this, the processor 1120 may include at least one processor or microprocessor. In an embodiment of the disclosure, part of the transceiver 1110 and the processor 1120 may be referred to as a CP.

The processor 1120 may include one or more processors. The one or more processors may include a universal processor such as a central processing unit (CPU), an application processor (AP), a digital signal processor (DSP), etc., a graphic processing unit (GPU), a vision processing unit (VPU), etc., or a dedicated artificial intelligence (AI) processor such as a neural processing unit (NPU). For example, when the one or more processors are the dedicated AI processors, the dedicated AI processors may be designed in a hardware structure that is specific to dealing with a particular AI model.

In an embodiment, the processor 1120 may be configured to compress CSI data estimated between a BS and the UE 1100 through an AI model for encoding jointly trained with an AI model for decoding of the BS. The processor 1120 may transmit the compressed CSI data to the BS. The processor 1120 may transmit the CSI data before compression is performed to the BS based on a preset condition. The processor 1120 may receive information for updating the AI model for encoding when the BS determines to update the AI model for encoding based on the CSI data.

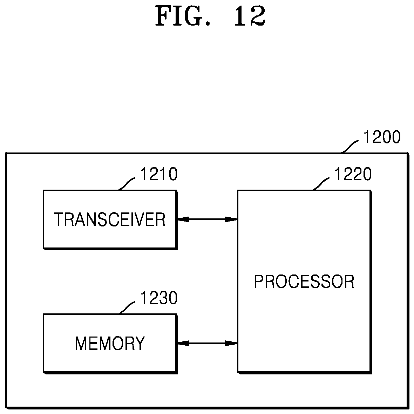

FIG. 12 is a block diagram of a BS, according to an embodiment.

Referring to FIG. 12, the BS 1200 may include a transceiver 1210, a processor 1220, and a memory 1230. The transceiver 1210, the processor 1220 and the memory 1230 of the BS 1200 may operate according to the aforementioned communication method of the BS 1200. Elements of the BS 1200 are not, however, limited thereto. For example, the base station 1200 may include more or fewer elements than described above. In addition, the transceiver 1210, the processor 1220, and the memory 1230 may be implemented in a single chip. The processor 1220 may include one or more processors.

A receiver and a transmitter of the BS 1200 are collectively referred to as the transceiver 1210, which may transmit or receive signals to or from a UE or a network entity. The signals to be transmitted to or received from the UE or the network entity may include control information and data. For this, the transceiver 1210 may include an RF transmitter for up-converting the frequency of a signal to be transmitted and amplifying the signal and an RF receiver for low-noise amplifying a received signal and downconverting the frequency of the received signal. It is merely an example of the transceiver 1210, and the elements of the transceiver 1210 are not limited to the RF transmitter and RF receiver.

The transceiver 1210 may perform functions for transmitting and receiving signals on a wireless channel. For example, the transceiver 1210 may receive a signal on a wireless channel and output the signal to the processor 1220, and transmit a signal output from the processor 1220 on a wireless channel.

The memory 1230 may store a program and data required for operation of the base station 1200. Furthermore, the memory 1230 may store control information or data included in a signal obtained by the base station 1200. The memory 1230 may include a storage medium such as a ROM, a RAM, a hard disk, a CD-ROM, and a DVD, or a combination of storage mediums. Alternatively, the memory 1230 may not be separately present but integrated into the processor 1220. The memory 1230 may include a volatile memory, a non-volatile memory, or a combination of the volatile memory and the non-volatile memory. The memory 1230 may also provide the stored data at the request of the processor 1220.

The processor 1220 may control a series of processes for the BS 1200 to be operated according to the embodiments of the disclosure. For example, the processor 1220 may receive control signals and data signals through the transceiver 1210 and process the received control signals and data signals. The processor 1220 may transmit the processed control signal and data signal through the transceiver 1210. The processor 1220 may record data to the memory 1230 or read out data from the memory 1330. The processor 1220 may perform functions of a protocol stack requested by a communication standard. For this, the processor 1220 may include at least one processor or microprocessor. In an embodiment of the disclosure, part of the transceiver 1210 and the processor 1220 may be referred to as a CP.

The processor 1220 may include one or more processors. The one or more processors may include a universal processor such as a central processing unit (CPU), an application processor (AP), a digital signal processor (DSP), etc., a graphic processing unit (GPU), a vision processing unit (VPU), etc., or a dedicated artificial intelligence (AI) processor such as a neural processing unit (NPU). For example, when the one or more processors are the dedicated AI processors, the dedicated AI processors may be designed in a hardware structure that is specific to dealing with a particular AI model.

In an embodiment, the processor 1220 may receive, from the UE, CSI data compressed through the AI model for encoding jointly trained with an AI model for decoding of the BS. Furthermore, the processor 1220 may receive, from the UE, the CSI data before compression is performed based on a preset condition. The processor 1220 may determine to update the AI model for encoding based on the CSI data. Furthermore, the processor 1220 may transmit information for updating the AI model for encoding.

Functions related to AI according to embodiments of the disclosure are operated through a processor and a memory. There may be one or more processors. The one or more processors may include a universal processor such as a central processing unit (CPU), an application processor (AP), a digital signal processor (DSP), etc., a graphic processing unit (GPU), a vision processing unit (VPU), etc., or a dedicated artificial intelligence (AI) processor such as a neural processing unit (NPU). The one or more processors may control processing of input data according to a predefined operation rule or an AI model stored in the memory. When the one or more processors are the dedicated AI processors, they may be designed in a hardware structure that is specific to dealing with a particular AI model.

The predefined operation rule or the AI model may be made by learning. Specifically, the predefined operation rule or the AI model being made by learning refers to the predefined operation rule or the AI model established to perform a desired feature (or an object) being made when a basic AI model (or a deep learning model) is trained by a learning algorithm with a lot of training data. Such learning may be performed by a device itself in which AI is performed according to the disclosure, or by a separate server and/or system. Examples of the learning algorithm may include supervised learning, unsupervised learning, semi-supervised learning, or reinforcement learning, without being limited thereto.

The AI model (or deep learning model) may be made up of a plurality of neural network layers. Each of the plurality of neural network layers may have a plurality of weight values, and perform neural network operation through operation between an operation result of the previous layer and the plurality of weight values. The plurality of weight values owned by the plurality of neural network layers may be optimized by learning results of the AI model. For example, the plurality of weight values may be updated to reduce or minimize a loss value or a cost value obtained by the AI model during a training procedure. An artificial neural network may include a deep neural network (DNN), for example, a convolutional neural network (CNN), a recurrent neural network (RNN), a restricted Boltzmann machine (RBM), a deep belief network (DBN), a bidirectional recurrent deep neural network (BRDNN), or a deep Q-network, without being limited thereto.

Specific examples for describing embodiments of the disclosure are merely a combination of one of standards, methods, detailed methods, and operations, and through a combination of two or more of the aforementioned schemes, the BS and the UE may update an autoencoder for obtaining compressed CSI data through CSI profiling. The CSI profiling may be performed according to a method determined by a combination of one, two or more of the aforementioned schemes. For example, it may be possible to perform part of an operation in an embodiment in combination with part of an operation in another embodiment.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a machine-readable storage medium (e.g., a CD-ROM) or distributed directly between two user devices (e.g., smart phones) or online (e.g., downloaded or uploaded). In the case of the online distribution, at least part of the computer program product (e.g., a downloadable app) may be at least temporarily stored or arbitrarily created in a storage medium that may be readable to a device such as a server of the manufacturer, a server of the application store, or a relay server.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a storage medium (e.g., a CD-ROM), through an application store (e.g., play store™), directly between two user devices (e.g., smart phones), or online (e.g., downloaded or uploaded). In the case of the online distribution, at least part of the computer program product (e.g., a downloadable app) may be at least temporarily stored or arbitrarily created in a storage medium that may be readable to a device such as a server of the manufacturer, a server of the application store, or a relay server.

**Claims**

1. A method of a user equipment (UE) for reporting a channel state information (CSI) in a wireless communication system, the method comprising:

   compressing CSI data estimated between a base station (BS) and the UE through an artificial intelligence (AI) model for encoding jointly trained with an AI model for decoding of the BS;
   transmitting the compressed CSI data to the BS;
   transmitting, to the BS, the CSI data before compression is performed, based on a preset condition; and
   receiving information for updating the AI model for encoding when the BS determines to update the AI model for encoding based on the CSI data.

2. A method of a base station (BS) for reporting a channel state information (CSI) in a wireless communication system, the method comprising:

   receiving, from a UE, CSI data compressed through an AI model for encoding jointly trained with an AI model for decoding of the BS;
   receiving, from the UE, CSI data before compression is performed, based on a preset condition;
   determining to update the AI model for encoding based on the CSI data; and
   transmitting information for updating the AI model for encoding.

3. A user equipment (UE) for reporting a channel state information (CSI) in a wireless communication system, the UE comprising:

a transceiver; and
a processor connected to the transceiver and configured to
compress CSI data estimated between a base station (BS) and the UE through an artificial intelligence (AI) model for encoding jointly trained with an AI model for decoding of the BS,
transmit the compressed CSI data to the BS,
transmit, to the BS, the CSI data before compression is performed, based on a preset condition, and
receive information for updating the AI model for encoding when the BS determines to update the AI model for encoding based on the CSI data.

4. The UE of claim 3, wherein the processor is configured to receive, from the BS, a request for the CSI data when decoding performance of an uplink (UL) signal received by the BS fails to satisfy a preset threshold or a change in channel state is detected based on the UL signal.

5. The UE of claim 4, wherein the CSI data comprises a matrix representing

a state of a channel,
wherein the request for the CSI data comprises at least one of a number of matrices requested by the BS for transmission or a partition indicator which specifies at least some of the matrices requested by the BS for transmission.

6. The UE of claim 3, wherein the processor is configured to

receive channel estimation configuration information from the BS by higher layer signaling, and
transmit the CSI data based on an interval set based on the channel estimation configuration information.

7. The UE of claim 3, wherein the processor is configured to

transmit, to the BS, a request to update the AI model for encoding when decoding performance of a downlink (DL) signal received by the UE fails to satisfy a preset threshold or a change in channel state is detected based on the DL signal, and
receive, from the BS, a request for the CSI data based on the request to update the AI model for encoding.

8. The UE of claim 3, wherein the information for updating the AI model for

encoding comprises neural network (NN) configuration information for an AI model for encoding updated in the BS, and
wherein the NN configuration information comprises information about at least one of a type of a layer included in the updated AI model for encoding, a number of layers, a number of filter kernels, a size of the filter kernel or a parameter of the filter kernel.

9. The UE of claim 3, wherein:

when decoding performance of a UL signal received by the BS fails to satisfy a preset threshold, the compressed CSI is identified as having an error, and
the information for updating the AI model for encoding comprises an indicator indicating CSI data associated with the error among a plurality of pieces of CSI data transmitted to the BS or an indicator indicating a portion of CSI data associated with the error.

10. A base station (BS) for reporting a channel state information (CSI) in a wireless communication system, the BS comprising:

a transceiver; and
a processor connected to the transceiver and configured to

receive, from a user equipment (UE), CSI compressed through an AI model for encoding jointly trained with an AI model for decoding of the BS, receive, from the UE, CSI data before compression is performed, based on a preset condition,
determine to update the AI model for encoding based on the CSI data, and
transmit information for updating the AI model for encoding.

11. The BS of claim 10, wherein the processor is configured to transmit, to the UE, a request for the CSI data when decoding performance of an uplink (UL) signal received by the BS fails to satisfy a preset threshold or a change in channel state is detected based on the UL signal.

12. The BS of claim 10, wherein the processor is configured to

transmit channel estimation configuration information to the UE by higher layer signaling, and
receive the CSI data based on an interval set based on the channel estimation configuration information.

13. The BS of claim 10, wherein the processor is configured to

receive, from the UE, a request to update the AI model for encoding when decoding performance of a downlink (DL) signal received by the UE fails to satisfy a preset threshold or a change in channel state is detected based on the DL signal, and
transmit, to the UE, a request for the CSI data based on the request to update the AI model for encoding.

14. The BS of claim 10, wherein the information for updating the AI model for

encoding comprises neural network (NN) configuration information for an AI model for encoding updated in the BS, and
wherein the NN configuration information comprises information about at least one of a type of a layer included in the updated AI model for encoding, a number of layers, a number of filter kernels, a size of the filter kernel or a parameter of the filter kernel.

15. The BS of claim 10, wherein the processor is configured to identify that

there is an error in the compressed CSI when decoding performance of a UL signal received by the BS fails to satisfy a preset threshold, and
wherein the information for updating the AI model for encoding comprises an indicator indicating CSI data associated with the error among a plurality of pieces of CSI data transmitted to the BS or an indicator indicating a portion of CSI data associated with the error.

# FIG. 1

INPUT(V)    ENCODER (UE)    COMPRESSED CSI DATA, Z    DECODER (BS)    OUTPUT($\tilde{V}$)

AUTOENCODER

# FIG. 2

# FIG. 3

110 — UE

120 — BS

TRANSMIT CSI-RS
S310

S320
COMPRESS CSI DATA

TRANSMIT COMPRESSED CSI DATA
S330

TRANSMIT CSI DATA
S340

S350
DETERMINE TO UPDATE
AI MODEL FOR ENCODING

TRANSMIT INFORMATION FOR
UPDATING AI MODEL FOR ENCODING
S360

# FIG. 4

# FIG. 5A

510

500

N_tBS ANTENNA
(N_t=8)

K SUB-BAND (K=13)

# FIG. 5B

500

520

$N_t$ BS ANTENNA
($N_t$=8)

K SUB-BAND (K=13)

## FIG. 6

START
↓
**MONITOR DECODING PERFORMANCE OF RECEIVED SIGNAL OR CHANNEL CHANGE** — S605
↓
**PROFILING REQUIRED?** — S610
— YES → **PORTION OF CSI DATA REQUIRED?** — S620
— NO ↓
**MAINTAIN AI MODEL FOR ENCODING** — S615

(S620) — NO ↓
**TRANSMIT INDICATOR SPECIFYING CSI DATA** — S625
↓
**RECEIVE CSI DATA CORRESPONDING TO INDICATOR** — S630

(S620) — YES →
**TRANSMIT INDICATOR SPECIFYING PORTION OF CSI DATA** — S635
↓
**RECEIVE PORTION OF CSI DATA CORRESPONDING TO INDICATOR** — S640

↓
**DETERMINE TO UPDATE AI MODEL FOR ENCODING** — S645
↓
**TRANSMIT INFORMATION FOR UPDATING AI MODEL FOR ENCODING** — S650
↓
END

EP 4 518 181 A1

**FIG. 7**

START

S710 — TRANSMIT COMPRESSED CSI DATA

S720 — CSI DATA REQUESTED BY BS?
- NO → S730 — MAINTAIN AI MODEL FOR ENCODING
- YES → S740 — INDICATOR INDICATING PORTION OF CSI DATA RECEIVED?
  - YES → S760 — TRANSMIT PORTION OF CSI DATA
  - NO → S750 — TRANSMIT CSI DATA

S770 — RECEIVE INFORMATION FOR UPDATING AI MODEL FOR ENCODING

S780 — UPDATE AI MODEL FOR ENCODING

END

# FIG. 8

110    UE

120    BS

TRANSMIT CHANNEL ESTIMATION
CONFIGURATION INFORMATION
S810

TRANSMIT CSI-RS
S820

S830
COMPRESS CSI DATA

TRANSMIT COMPRESSED CSI DATA
S840

S850
DETERMINE CSI DATA
TRANSMISSION BASED
ON SET INTERVAL

TRANSMIT CSI DATA
S860

S870
DETERMINE TO UPDATE
AI MODEL FOR ENCODING

TRANSMIT INFORMATION FOR
UPDATING AI MODEL FOR ENCODING
S880

# FIG. 9

# FIG. 10

```
                    ( START )
                        │
                        ▼           ⟋ S1010
        ┌───────────────────────────────┐
        │      RECEIVE COMPRESSED        │
        │      CSI DATA AND CSI DATA     │
        └───────────────────────────────┘
                        │
                        ▼           ⟋ S1020
                  ╱────────────╲
                 ╱     ERROR     ╲         NO
        ╱ RESOLVED AFTER PROFILING ╲──────────────────┐
                ╲  AND RETRAINING? ╱                   │
                 ╲────────────────╱                    │
                        │ YES                          │
                        ▼    ⟋ S1030                    ▼    ⟋ S1040
        ┌───────────────────────────┐  ┌───────────────────────────────┐
        │   TRANSMIT SIGNAL INDICATING │ │  TRANSMIT INDICATOR INDICATING CSI │
        │      ERROR RESOLUTION      │  │   DATA ASSOCIATED WITH ERROR   │
        └───────────────────────────┘  └───────────────────────────────┘
                        │                             │
                        └─────────────┬───────────────┘
                                      ▼
                                  ( END )
```

# FIG. 11

FIG. 12

## INTERNATIONAL SEARCH REPORT

| International application No. |
|---|
| **PCT/KR2023/008418** |

**A. CLASSIFICATION OF SUBJECT MATTER**

**H04B 7/06**(2006.01)i; **H04W 72/23**(2023.01)i; **G06N 3/04**(2006.01)i

According to International Patent Classification (IPC) or to both national classification and IPC

**B. FIELDS SEARCHED**

Minimum documentation searched (classification system followed by classification symbols)

H04B 7/06(2006.01); G06N 3/02(2006.01); H04B 1/3816(2015.01); H04B 17/24(2015.01); H04B 17/30(2015.01); H04B 7/04(2006.01); H04L 12/24(2006.01); H04W 24/10(2009.01); H04W 28/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI, report, AI(artificial intelligence) model, encoding, decoding, compression, update, configuration, period, UL(uplink), DL(downlink), detect, NN(neural network), threshold

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0117611 A (LG ELECTRONICS INC.) 29 September 2021 (2021-09-29)<br>See paragraphs [0169]-[0170] and [0182]-[0183]; and figures 18 and 20. | 1-3,6,10,12 |
| A | | 4-5,7-9,11,13-15 |
| Y | US 2021-0195462 A1 (QUALCOMM INCORPORATED) 24 June 2021 (2021-06-24)<br>See paragraph [0046]. | 1-3,6,10,12 |
| Y | KR 10-2014-0010021 A (LG ELECTRONICS INC.) 23 January 2014 (2014-01-23)<br>See paragraph [0099]; and claim 1. | 6,12 |
| A | US 2020-0366326 A1 (JASSAL, Aman et al.) 19 November 2020 (2020-11-19)<br>See paragraphs [0073]-[0123]; and figures 5-10. | 1-15 |
| A | KR 10-2019-0017586 A (SAMSUNG ELECTRONICS CO., LTD.) 20 February 2019 (2019-02-20)<br>See paragraphs [0321]-[0332]; and figures 20-21. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 September 2023** | **22 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/008418**

| Patent document cited in search report | | | Publication date (day/month/year) | Patent family member(s) | | | Publication date (day/month/year) |
|---|---|---|---|---|---|---|---|
| KR | 10-2021-0117611 | A | 29 September 2021 | US | 11522639 | B2 | 06 December 2022 |
| | | | | US | 2021-0297178 | A1 | 23 September 2021 |
| US | 2021-0195462 | A1 | 24 June 2021 | US | 11595847 | B2 | 28 February 2023 |
| KR | 10-2014-0010021 | A | 23 January 2014 | EP | 2661000 | A2 | 06 November 2013 |
| | | | | EP | 2661000 | A4 | 22 March 2017 |
| | | | | EP | 2661000 | B1 | 06 June 2018 |
| | | | | KR | 10-1792511 | B1 | 02 November 2017 |
| | | | | US | 2013-0279455 | A1 | 24 October 2013 |
| | | | | US | 9288791 | B2 | 15 March 2016 |
| | | | | WO | 2012-091448 | A2 | 05 July 2012 |
| | | | | WO | 2012-091448 | A3 | 23 August 2012 |
| US | 2020-0366326 | A1 | 19 November 2020 | US | 10992331 | B2 | 27 April 2021 |
| | | | | WO | 2020-228822 | A1 | 19 November 2020 |
| KR | 10-2019-0017586 | A | 20 February 2019 | KR | 10-2436802 | B1 | 26 August 2022 |
| | | | | US | 11323902 | B2 | 03 May 2022 |
| | | | | US | 2019-0053089 | A1 | 14 February 2019 |
| | | | | WO | 2019-031940 | A1 | 14 February 2019 |

Form PCT/ISA/210 (patent family annex) (July 2022)